# FASCICULE DE BREVET EUROPEEN

(11) **EP 4 239 575 B1**
(45) Date de publication et mention de la délivrance du brevet: **26.06.2024**
(21) Numéro de dépôt: 23159469.8
(22) Date de dépôt: 01.03.2023
(51) Int. Cl.: G06T 7/277

(54) **DISPOSITIF DE SUIVI D'UNE ÉVOLUTION D´AU MOINS UN AÉRONEF DANS UN ESPACE AÉRIEN, SYSTÈME DE SURVEILLANCE ET PROCÉDÉ DE SUIVI ASSOCIÉS**
VORRICHTUNG ZUR VERFOLGUNG DER ENTWICKLUNG MINDESTENS EINES FLUGZEUGS IN EINEM LUFTRAUM, ÜBERWACHUNGSSYSTEM UND VERFOLGUNGSVERFAHREN DAFÜR
DEVICE FOR TRACKING AN EVOLUTION OF AT LEAST ONE AIRCRAFT IN AN AIR SPACE, ASSOCIATED MONITORING SYSTEM AND TRACKING METHOD

(30) Priorité: 01.03.2022 FR 2201789
(43) Date de publication de la demande: 06.09.2023
(73) Titulaire: THALES, 92400 Courbevoie (FR)
(72) Inventeur: JOUABER, Sami, 91300 MASSY CEDEX (FR); PILTE, Marion, 91300 MASSY (FR); BONNABEL, Silvère, 98800 NOUMEA (NOUVELLE CALEDONIE) (FR); VELASCO-FORERO, Santiago, 91190 GIF SUR YVETTE (FR)
(74) Mandataire: Lavoix

(56) Documents cités:
- EP-A1- 3 722 830
- CN-A- 107 704 432
- KAO YU-CHUN ET AL: "Interacting Multiple Model and Probabilistic Data Association Filter on Radar Tracking for ATM System", GNSS 2012 - PROCEEDINGS OF THE 25TH INTERNATIONAL TECHNICAL MEETING OF THE SATELLITE DIVISION OF THE INSTITUTE OF NAVIGATION (ION GNSS 2012), THE INSTITUTE OF NAVIGATION, 8551 RIXLEW LANE SUITE 360 MANASSAS, VA 20109, USA, 21 septembre 2012 (2012-09-21), pages 764-773, XP056008392,
- JOUABER SAMI ET AL: "NNAKF: A Neural Network Adapted Kalman Filter for Target Tracking", ICASSP 2021 - 2021 IEEE INTERNATIONAL CONFERENCE ON ACOUSTICS, SPEECH AND SIGNAL PROCESSING (ICASSP), IEEE, 6 juin 2021 (2021-06-06), pages 4075-4079, XP033955397, DOI: 10.1109/ICASSP39728.2021.9414681

## Description

La présente invention concerne un dispositif de suivi d'une évolution d'au moins un aéronef dans un espace aérien.

L'invention concerne également un système de surveillance comprenant un dispositif de suivi.

L'invention concerne en outre un procédé de suivi d'une évolution d'au moins un aéronef dans un espace aérien.

L'invention concerne le domaine de la surveillance aérienne. L'invention s'applique notamment à des systèmes de contrôle aptes à surveiller de larges zones territoriales par traitement d'informations, reçues par exemples par des systèmes RADAR (de l'anglais *RAdio Détection And Ranging).*

On connaît des systèmes de surveillance comprenant un dispositif de suivi (de l'anglais *tracker*) et un module de classification (de l'anglais *classifier*).

Le dispositif de suivi est configuré pour traiter les informations issues de systèmes RADAR pour obtenir des données de trajectoire d'aéronefs. Le module de classification est configuré pour classifier, selon des règles de classification prédéterminées, un type ou une classe d'un aéronef présentant la trajectoire selon les données de trajectoire.

Classiquement, un opérateur définit des paramètres pour le dispositif de suivi, afin d'obtenir les données de trajectoire. La définition des paramètres est typiquement mise en oeuvre en fonction d'une mission de surveillance, par l'expertise de l'opérateur.

La publication "Interacting Multiple Model and Probabilistic Data Association Filter on Radar Tracking for ATM System", Kao Yu-Chun et al., ION GNSS 2012, pp. 764-773 ainsi que la demande de brevet CN107704432A divulguent le suivi de la trajectoire d'un aéronef faisant intervenir plusieurs modèles cinématiques différents en utilisant des filtres de Kalman avec différents paramètres.

La publication "NNAKF: A Neural Network Adapted Kalman Filter for Target Tracking", Jouaber Sami et al, ICASSP 2021, pp. 4075-4079, ainsi que la demande de brevet EP3722830A1 divulguent l'utilisation d'un réseau de neurones pour le suivi d'aéronef.

Toutefois, lorsque par exemple la mission de surveillance ne correspond pas ou uniquement en partie aux paramètres définis, le suivi des aéronefs n'est pas entièrement satisfaisant. En particulier, les données de trajectoire sont susceptibles de présenter des défauts.

Un but de la présente invention est ainsi de proposer un dispositif de suivi et un procédé associé permettant d'augmenter la précision de suivi d'au moins un aéronef dans un espace aérien.

A cet effet, l'invention a pour objet un dispositif de suivi d'une évolution d'au moins un aéronef, selon la revendication 1.

Le dispositif de suivi permet en effet d'augmenter la précision de suivi d'au moins un aéronef dans un espace aérien, car le premier réseau de neurones artificiels prend en compte l'ensemble d'états pour permettre la définition de la matrice de transition par le second réseau de neurones artificiels. Cette matrice de transition permet ainsi de choisir le ou les filtres adaptés pour générer l'ensemble d'états.

Notamment, le dispositif de suivi permet, de manière automatique et dynamique, d'adapter le choix des filtres à une itération donnée, afin d'améliorer la précision de suivi et en particulier la précision des données de trajectoire.

La combinaison du premier réseau de neurones artificiels pour la fourniture de la donnée de paramétrage, avec le second réseau de neurones artificiels pour la fourniture de la matrice de transition, permet également d'améliorer la précision de suivi. Les deux réseaux de neurones artificiels sont ainsi dédiés à des tâches spécifiques, et présentent ainsi un fonctionnement optimisé respectivement pour obtenir la donnée de paramétrage et la matrice de transition. La combinaison des deux réseaux de neurones permet ainsi, de manière synergétique, d'obtenir une matrice de transition qui s'adapte dynamiquement et avec une grande précision au comportement de l'aéronef détecté.

Selon d'autres aspects avantageux, le dispositif de suivi comprend une ou plusieurs des caractéristiques selon les revendications 2 à 8, prises isolément ou selon toutes les combinaisons techniquement possibles.

L'invention a également pour objet un système de surveillance selon la revendication 9.

L'invention a également pour objet un procédé de suivi d'une évolution d'au moins un aéronef selon la revendication 10.

Ces caractéristiques et avantages de l'invention apparaîtront à la lecture de la description qui va suivre, donnée uniquement à titre d'exemple non limitatif, et faite en référence aux dessins annexés, sur lesquels :
- [Fig 1] la figure 1 est une représentation schématique d'un exemple d'un système de surveillance comprenant un dispositif de suivi selon l'invention ;
- [Fig 2] la figure 2 est une représentation schématique du système de surveillance de la figure 1, dans lequel le dispositif de suivi comprend un module de génération selon un exemple ;
- [Fig 3] la figure 3 est un ordinogramme d'un exemple d'un procédé de suivi d'une évolution d'au moins un aéronef dans un espace aérien, selon l'invention.

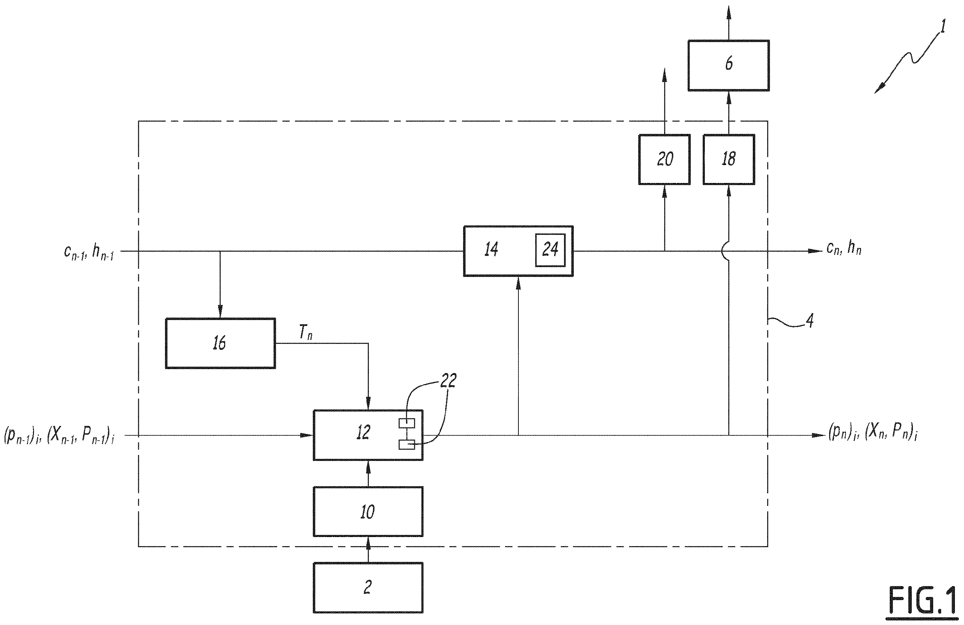

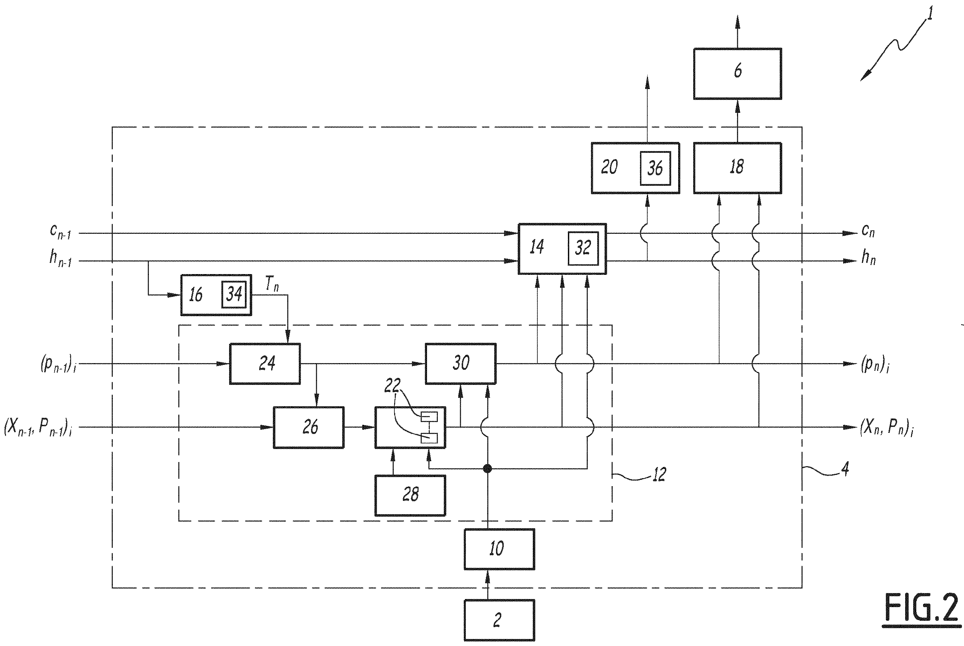

Sur les figures 1 et 2, un système de surveillance 1 comprend au moins un capteur d'images 2, un dispositif de suivi 4 et un dispositif de classification 6.

Le capteur d'images 2 est configuré pour générer une suite d'images d'un espace aérien.

La suite d'images comprend par exemple une suite de plots ou une suite de pistes de l'espace aérien. En particulier, en plus de pistes correspondant à des aéronefs, la suite d'images est susceptible de comprendre des pistes correspondant à des phénomènes atmosphériques ou des montagnes par exemple.

Le capteur d'images 2 comprend par exemple un système RADAR (de l'anglais *RAdio Detection And Ranging*) pour générer la suite d'images. Selon un exemple, le capteur d'images 2 est un capteur du type radar primaire, également appelé PSR (de l'anglais *Primary Surveillance Radar*) ou un capteur du type radar secondaire, également appelé SSR (de l'anglais *Secondary Surveillance Radar*)*.*

Selon un exemple, le capteur d'images 2 est doté d'un contrôleur (non représenté) configuré pour contrôler le fonctionnement du capteur d'images 2. Par exemple, le contrôleur du capteur d'images 2 est configuré pour définir la position et la taille de l'espace aérien balayé par le capteur d'images 2.

Le capteur d'images 2 est en outre configuré pour transmettre la suite d'images au dispositif de suivi 4.

En variante non représentée, le système de surveillance 1 comprend une base de données configurée pour mémoriser la suite d'images, et pour transmettre la suite d'images au dispositif de suivi 4, par exemple à la place de la suite d'images transmise par le capteur d'images 2.

Le dispositif de suivi 4 est en particulier configuré pour détecter au moins un aéronef présent dans l'espace aérien, et pour suivre l'évolution de l'aéronef dans l'espace aérien. Cet aéronef est dénommé « aéronef détecté » dans la présente description.

A partir de la suite d'images, le dispositif de suivi 4 est configuré pour générer les données de trajectoire comportant un ensemble de paramètre(s) cinématique(s) de l'aéronef détecté. Par exemple, une donnée de trajectoire comprend un vecteur de trajectoire. Le vecteur de trajectoire comporte trois composantes dans l'espace tridimensionnel, à savoir une vitesse, une courbure perpendiculaire à la vitesse, et une torsion perpendiculaire à la vitesse et à la courbure.

Le dispositif de classification 6 est configuré pour déterminer un type d'aéronef de l'aéronef détecté en fonction des données de trajectoire de l'aéronef détecté déterminées par le dispositif de suivi 4. Par exemple, le dispositif de classification 6 est configuré pour mémoriser un ensemble de types d'aéronefs prédéterminés, et pour déterminer le type d'aéronef de l'aéronef détecté parmi cet ensemble de types.

Un exemple du dispositif de suivi 4 est maintenant décrit en référence aux figures 1 et 2.

Le dispositif de suivi 4 est en particulier configuré pour mettre en oeuvre des calculs par itération. Une itération correspond à un pas de temps de calcul.

Sur les figures 1 et 2 et notamment dans la présente description, une itération donnée est désignée par l'indice *n*, et une itération qui précède directement cette itération donné *n* est désignée par l'indice *n* - 1.

Le dispositif de suivi 4 comprend un module de réception 10, un module de génération 12, un module de paramétrage intermédiaire 14, un module de paramétrage 16, un module d'émission 18 et un module d'interprétation 20.

Selon un exemple, le module de réception 10, le module de génération 12, le module de paramétrage intermédiaire 14, le module de paramétrage 16, le module d'émission 18 et le module d'interprétation 20 sont réalisés chacun sous forme d'un logiciel, ou d'une brique logicielle, par exemple stockés sur une mémoire et exécutables par un processeur, non représentés sur les figures.

Selon un autre exemple, le module de réception 10, le module de génération 12, le module de paramétrage intermédiaire 14, le module de paramétrage 16, le module d'émission 18 et le module d'interprétation 20 sont réalisés chacun sous la forme d'un composant logique programmable, tel qu'un FPGA (de l'anglais *Field Programmable Gate Array*) ou sous la forme d'un circuit intégré dédié, tel qu'un ASIC (de l'anglais *Application Spécifie integrated Circuit).*

Le module de réception 10 est configuré pour recevoir la suite d'images de l'espace aérien, et pour la transmettre au module de génération 12.

Le module de génération 12 est configuré pour générer un ensemble d'états (*X, P*)*ᵢ* de l'aéronef détecté, relatifs à des paramètres cinématiques de l'aéronef détecté, en fonction de la suite d'images et en fonction d'une matrice de transition *T*.

En particulier, le module de génération 12 est configuré pour générer, pour l'itération donnée *n,* l'ensemble d'états (*Xₙ*,*Pₙ*)*ᵢ* en propageant l'ensemble d'états (*X*_{*n-*1},*P*_{*n-*1})*ᵢ* de l'itération précédente *n* - 1, et en fonction de la suite d'images et de la matrice de transition *T.*

Le module de génération 12 comprend une pluralité de filtres 22 comportant des modèles cinématiques. Chaque modèle cinématique correspond de préférence à un type de portion de trajectoire, comme par exemple une ligne droite, un virage ou une stagnation de l'aéronef.

Chaque filtre 22 est par exemple un filtre de Kalman.

Dans l'exemple des figures 1 et 2 et dans l'exemple de la présente description, l'indice *i* indique que l'élément correspondant est généré ou reçu pour le filtre *i* de la pluralité de filtres 22. L'indice *i* est un nombre entier et compris entre 1 et *m*, où *m* est le nombre de filtres de la pluralité de filtres 22.

Par exemple, l'ensemble d'états (*X, P*)*ᵢ* désigne les états obtenus par le filtre *i.*

L'ensemble d'états (*X*, *P*)*ᵢ* comprend notamment une matrice d'états *X* et une matrice de covariance *P* de l'erreur des états de la matrice d'états *X*.

L'ensemble d'états (*X*, *P*)*ᵢ* comprend par exemple au moins un élément parmi :
- une vitesse horizontale de l'aéronef détecté ;
- une vitesse verticale de l'aéronef détecté, et
- un taux de virage de l'aéronef détecté.

Selon un exemple, chaque filtre 22 est configuré pour générer un gain de filtre de Kalman, une correction du gain de filtre de Kalman, et/ou un paramètre relatif à une matrice d'innovation de filtre de Kalman.

Le module de génération 12 est de préférence configuré pour générer, pour chaque filtre *i* de la pluralité de filtres 22, une valeur de probabilité *pᵢ* correspondant à une probabilité que le filtre *i* comporte le modèle cinématique adapté pour suivre l'aéronef détecté à partir de la suite d'images.

La matrice de transition *T* est désignée comme matrice de transition *Tₙ* pour l'itération donnée *n*.

La matrice de transition *Tₙ* est apte à modifier, pour l'itération donnée *n* du dispositif de suivi 4, des probabilités définissant le ou les filtre(s) 22 parmi la pluralité de filtres générant, lors de cette itération *n,* l'ensemble d'états (*Xₙ*, *Pₙ*)*ᵢ*.

La matrice de transition *T* comprend de préférence, pour chaque filtre 22 de la pluralité de filtres, un vecteur de transition.

Chaque vecteur de transition est par exemple un vecteur obtenu par normalisation de chaque colonne de la matrice de transition *T* par une fonction softmax, également appelée fonction exponentielle normalisée.

La matrice de transition *T* a par exemple une dimension égale à m, ou m est le nombre de filtres 22 de la pluralité de filtres. La matrice de transition *T* est par exemple une matrice de dimension *m* × *m*.

Un exemple du module de génération 12 est maintenant décrit en référence à la figure 2.

Le module de génération 12 comprend par exemple, en plus de la pluralité de filtres 22, un premier sous-module 24, un second sous-module 26, un sous-module de réglage 28 et un troisième sous-module 30.

Le premier sous-module 24 est configuré pour recevoir la matrice de transition *Tₙ* et chaque valeur de probabilité (*p*_{*n-*1})*ᵢ* de l'itération précédente *n* - 1 à l'itération donnée *n*. Le premier sous-module 24 est configuré pour appliquer la matrice de transition *Tₙ* sur chaque valeur de probabilité (*p*_{*n-*1})*ᵢ* pour obtenir, pour chaque filtre i, une valeur intermédiaire de probabilité.

De préférence, la matrice de transition *Tₙ* est apte à modifier les valeurs de probabilité (*p*_{*n-*1})*ᵢ* de l'itération précédente, pour obtenir la valeur intermédiaire de probabilité pour chaque filtre i. Les valeurs intermédiaires de probabilité définissent le ou les filtres 22 générant, lors de l'itération *n,* l'ensemble d'états (*Xₙ*,*Pₙ*)*ᵢ*.

De préférence, les valeurs intermédiaires de probabilité sont susceptibles de ne pas influer sur des paramétrages internes des filtres 22, et de définir uniquement la prise en compte du filtre 22 correspondant pour la génération de l'ensemble d'états (*Xₙ*, *Pₙ*)*ᵢ.*

Selon un exemple, le premier sous-module 24 est configuré multiplier la matrice de transition *Tₙ* et chaque valeur de probabilité (*p*_{*n*-1})*ᵢ* pour obtenir la valeur intermédiaire de probabilité.

La valeur intermédiaire de probabilité est notamment une valeur comprise entre 0 et 1 pour chaque filtre 22. Pour un filtre 22 donné, la valeur intermédiaire de probabilité est supérieure par rapport à cette valeur pour un autre filtre 22 lorsque l'ensemble d'états (*X*_{*n*-1}, *P*_{*n*-1})*ᵢ* correspond à un comportement du modèle cinématique de ce filtre.

Par exemple, lorsque l'ensemble d'états (*X*_{*n-*1}, *P*_{*n-*1})*ᵢ* de l'itération précédente correspond à une portion de trajectoire de l'aéronef présentant des virages brusques, la valeur intermédiaire de probabilité est supérieure pour un filtre 22 qui est adapté pour des virages brusques, que la valeur intermédiaire de probabilité pour un filtre adapté pour une ligne droite.

Le second sous-module 26 est configuré pour recevoir la valeur intermédiaire de probabilité du premier sous-module 24 pour chaque filtre 22, et pour pondérer l'ensemble d'états (*X*_{*n-*1}, *P*_{*n*-1})*ᵢ* en utilisant chaque valeur intermédiaire de probabilité, afin de transmettre un ensemble d'états pondérés à la pluralité de filtres 22.

Chaque filtre 22 correspond par exemple à une phase de vol spécifique de l'aéronef détecté.

Chaque filtre 22 est configuré pour propager l'ensemble d'états (*X*_{*n-*1}, *P*_{*n*-1})*ᵢ* du filtre i correspondant, de préférence pondéré par le second sous-module 26, pour obtenir l'ensemble d'états (*Xₙ*, *Pₙ*)*ᵢ* propagé de ce filtre *i.*

Chaque filtre 22 est en outre configuré pour mettre en oeuvre une phase de mise à jour de l'ensemble d'états (*Xₙ*, *Pₙ*)*ᵢ* par mesure.

En particulier, chaque filtre 22 est configuré pour recevoir la suite d'images comme mesure, et pour mettre à jour l'ensemble d'états (*Xₙ*, *Pₙ*)*ᵢ* du filtre *i* en utilisant la suite d'images.

Le module de réglage 28 est configuré pour régler des paramètres de chaque filtre de la pluralité de filtres 22, par exemple à partir d'une base de données prédéterminée ou à partir d'une information reçue par un opérateur.

En particulier, le module de réglage 28 est configuré pour régler des paramètres spécifiques à chaque filtre 22, mais non une composition choisie des filtres 22 utilisés pour propager l'ensemble d'états (*Xₙ*, *Pₙ*)*ᵢ*. Cette composition choisie est définie à partir des valeurs de probabilité (*p*_{*n*-1})*ᵢ*.

Le troisième sous-module 30 est configuré pour déterminer, pour chaque filtre i, la valeur de probabilité (*pₙ*)*ᵢ* de l'itération donnée *n* en appliquant l'ensemble d'états (*Xₙ*, *Pₙ*)*ᵢ* de cette itération, obtenu par la pluralité de filtres 22, à la valeur intermédiaire de probabilité de chaque filtre *i*. Selon un exemple, le troisième sous-module 30 est en outre configuré pour recevoir la suite d'images pour déterminer la valeur de probabilité (*pₙ*)*ᵢ* pour chaque filtre *i*.

Par exemple, le troisième sous-module 30 est configuré pour déterminer les valeurs de probabilité (*pₙ*)*ᵢ* en multipliant chacune d'entre elles par la différence entre une vraisemblance (de l'anglais *likelihood)* du filtre correspondant 22 et une vraisemblance minimale, pour obtenir un vecteur qui est normalisé par sa somme.

Chaque vraisemblance est la densité de probabilité associée à une distance nulle entre la position de l'aéronef estimée par le filtre 22 correspondant, et la position mesurée selon la suite d'images, par exemple exprimées sous forme de distributions gaussiennes.

La vraisemblance minimale est la vraisemblance présentant la valeur minimale parmi les vraisemblances de l'ensemble des filtres 22.

Le module de paramétrage intermédiaire 14 comprend un premier réseau de neurones artificiels 32.

Le premier réseau de neurones artificiels 32 est configuré pour générer une donnée de paramétrage, en particulier en propageant la donnée de paramétrage de l'itération précédente *n* - 1 par rapport à l'itération donnée *n,* pour obtenir la donnée de paramétrage de l'itération donnée *n*.

La donnée de paramétrage comprend par exemple un premier vecteur *cₙ* comprenant des données de mémoire du premier réseau de neurones artificiels 32 et un second vecteur *hₙ*. Le premier vecteur *cₙ* et/ou le second vecteur *hₙ* comprend par exemple une dimension égale à un nombre prédéterminé de types de portions de trajectoires d'aéronefs.

Une première variable d'entrée du premier réseau de neurones 32 dépend de l'ensemble d'états (*Xₙ*, *Pₙ*)*ᵢ*.

Par exemple, la première variable d'entrée est une variable déterminée en appliquant une fonction prédéterminée à l'ensemble d'états (*Xₙ*, *Pₙ*)*ᵢ*.

Selon un exemple, la première variable d'entrée dépend en outre de la valeur de probabilité (*pₙ*)*ᵢ* pour chaque filtre *i* et/ou de la suite d'images. Cela est par exemple illustré sur la figure 2, montrant que le module de paramétrage intermédiaire 14 est configuré pour recevoir en entrée l'ensemble d'états (*Xₙ*, *Pₙ*)*ᵢ* de la pluralité de filtres 22, la valeur de probabilité (*pₙ*)*ᵢ* pour chaque filtre i du troisième sous-module 30 et la suite d'images du module de réception 10.

Selon un exemple, la première variable d'entrée dépend en outre du gain de filtre de Kalman de chaque filtre 22, d'une correction du gain de filtre de Kalman de chaque filtre 22, et/ou d'un paramètre relatif à une matrice d'innovation de filtre de Kalman de chaque filtre 22.

Une seconde variable d'entrée du premier réseau de neurones 32 est de préférence la donnée de paramétrage de l'itération précédente *n* - 1 par rapport à l'itération donnée *n*. La donnée de paramétrage de l'itération précédente *n* - 1 comprend en particulier le premier vecteur *c*_{*n-*1} et le second vecteur *h*_{*n-*1} de l'itération précédente *n* - 1.

Une variable de sortie du premier réseau de neurones 32 est la donnée de paramétrage de l'itération donnée *n*.

Le premier réseau de neurones 32 est de préférence un réseau de neurones récurrents à mémoire court et long-terme.

Le premier réseau de neurones 32 comprend en particulier une cellule de mémoire, par exemple de type LSTM (de l'anglais pour *Long Short-Term Memory*).

La cellule de mémoire présente de préférence une taille de mémoire choisie en fonction du nombre de types d'aéronefs susceptibles d'être suivis par le dispositif de suivi 4 et/ou d'un nombre de types de cinématiques prédéterminées d'aéronefs.

Le premier réseau de neurones 32 comprend par exemple une pluralité de couches de neurones artificiels, par exemple quatre. Chaque couche de neurones artificiels est en particulier configurée pour lire des données de la cellule mémoire et/ou pour écrire des données sur la cellule mémoire.

Le module de paramétrage 16 est de préférence configuré pour recevoir, pour une itération donnée *n* du dispositif de suivi 4, la donnée de paramétrage de l'itération précédente *n* - 1 à l'itération donnée *n*.

Le module de paramétrage 16 comprend un second réseau de neurones artificiels 34.

Une variable d'entrée du second réseau de neurones artificiels 34 est la donnée de paramétrage, en particulier pour l'itération précédente *n* - 1.

Une variable de sortie du second réseau de neurones artificiels 34 est la matrice de transition *Tₙ*.

Le second réseau de neurones artificiels 34 est de préférence d'un autre type que le type du premier réseau de neurones artificiels 32.

Le module d'émission 18 est configuré pour émettre des données de trajectoire de l'aéronef détecté en fonction de l'ensemble d'états (*Xₙ*, *Pₙ*)*ᵢ*, notamment pour chaque filtre i, et optionnellement en outre en fonction de la valeur de probabilité (*pₙ*)*ᵢ* pour chaque filtre i. Par exemple, le module d'émission 18 est configuré pour pondérer l'ensemble d'états (*Xₙ*, *Pₙ*)*ᵢ* avec la valeur de probabilité (*pₙ*)*ᵢ* correspondante pour obtenir les données de trajectoire de l'aéronef détecté.

Le module d'interprétation 20 comprend un troisième réseau de neurones artificiels 36.

Une variable d'entrée du troisième réseau de neurones artificiels 36 est la donnée de paramétrage, et une variable de sortie du troisième réseau de neurones artificiels 36 est une probabilité d'appartenance de l'aéronef détecté à un type d'aéronef parmi un ensemble de types d'aéronefs prédéterminés.

Le module d'interprétation 20 est un module optionnel.

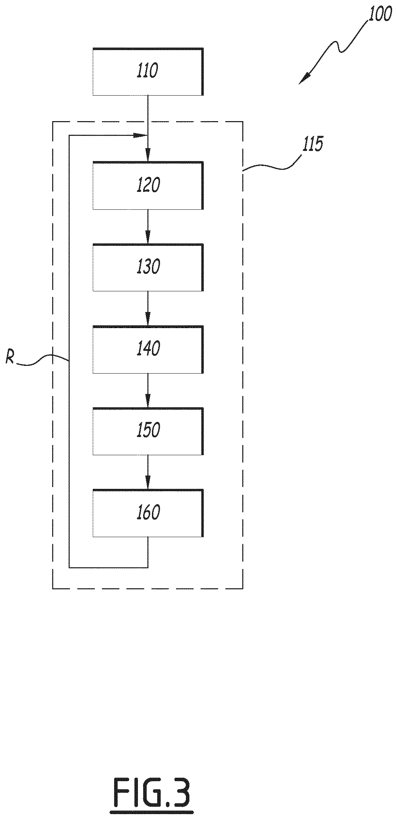

Le fonctionnement du système du système de surveillance 1 et en particulier du dispositif de suivi 4 est maintenant décrit en référence à la figure 3 montrant un ordinogramme d'un exemple d'un procédé de suivi 100 d'une évolution de l'aéronef détecté dans l'espace aérien.

Le procédé de suivi 100 comprend une phase d'apprentissage 110 et une phase d'exploitation 115.

Lors de la phase d'apprentissage 110, le premier et second réseau de neurones 32, 34, et optionnellement le troisième réseau de neurones 36, sont entrainés.

En particulier, des exemples de différentes données de paramétrage et les ensembles d'états (*Xₙ*, *Pₙ*)*ᵢ* correspondants sont appris au premier réseau de neurones 32.

Le second réseau de neurones 34 est par exemple entraîné en apprenant à ce réseau des exemples de matrices de transition *T* et des données de paramétrage correspondants.

Le troisième réseau de neurones 36 est par exemple entraîné en fournissant en entrée un exemple de l'ensemble d'états (*Xₙ*, *Pₙ*)*ᵢ*, et il est appris au troisième réseau de neurones artificiels 36 que cet ensemble d'états (*Xₙ*, *Pₙ*)*ᵢ* correspond à un type d'aéronef respectif.

Selon un exemple, chaque filtre 22 est en outre entraîné lors de la phase d'apprentissage 110.

La phase d'apprentissage 110 est de préférence mise en oeuvre au moins une fois avant la mise en oeuvre de la phase d'exploitation 115.

La phase d'exploitation 115 du procédé de suivi 100 comprend une étape de paramétrage 120, une étape de réception 130, une étape de génération 140, une étape d'émission 150 et une étape de paramétrage intermédiaire 160.

Chacune des étapes 120 à 160 est de préférence mise en oeuvre une fois pour chaque itération donnée.

Un exemple de la phase d'exploitation 115 pour l'itération donnée *n* est décrit dans ce qui suit.

Lors de l'étape de paramétrage 120, le second réseau de neurones artificiels 34 reçoit comme variable d'entrée la donnée de paramétrage et fournit comme variable de sortie la matrice de transition *T*.

De préférence, lors de l'étape de paramétrage 120, le second réseau de neurones artificiels 34 reçoit, pour l'itération donnée *n*, la donnée de paramétrage de l'itération précédente *n* - 1 par rapport à l'itération donnée *n,* et fournit la matrice de transition *Tₙ* de l'itération donnée *n*.

Lors de l'étape de réception 130, le module de réception 10 reçoit la suite d'images de l'espace aérien.

Lors de l'étape de génération 140, le module de génération 12 génère l'ensemble d'états (*Xₙ*, *Pₙ*)*ᵢ* de l'itération donnée *n* en fonction de la suite d'images et en fonction de la matrice de transition *T*.

Lors de l'étape d'émission 150, le module d'émission 18 émet les données de trajectoire de l'aéronef détecté en fonction de l'ensemble d'états (*Xₙ*, *Pₙ*)*ᵢ* pour l'itération donnée *n*.

Lors de l'étape de paramétrage intermédiaire 160, le premier réseau de neurones artificiels 32 reçoit comme variable d'entrée au moins une variable dépendant de l'ensemble d'états (*Xₙ*, *Pₙ*)*ᵢ*, et fournit comme variable de sortie la donnée de paramétrage.

De préférence, après la mise en oeuvre de l'itération *n,* une itération suivante *n* + 1 est mise en oeuvre, lors de laquelle chacune des étapes étape de paramétrage 120, de réception 130, de génération 140, d'émission 150 et de paramétrage intermédiaire 160 sont répétées, de préférence dans l'ordre précité.

Le passage de l'itération donnée *n* à l'itération suivante *n* + 1 est notamment illustré sur la figure 3 par la flèche R.

Par exemple, lors de l'étape de paramétrage 120 de l'itération suivante *n* + 1, le second réseau de neurones artificiels 34 reçoit comme variable d'entrée la donnée de paramétrage de l'itération *n* et fournit comme variable de sortie la matrice de transition *T* de l'itération *n* + 1.

On conçoit que le dispositif de suivi 4 et le procédé de suivi 100 présentent un grand nombre d'avantages.

En effet, le dispositif de suivi 4 permet d'augmenter la précision de suivi de l'aéronef détecté dans l'espace aérien, car la combinaison du premier et second réseau de neurones 32, 34 ainsi que le paramétrage du module de génération 12 par la matrice de transition T permettent, à chaque itération donnée, de choisir un ou certains filtres 22 parmi la pluralité de filtres.

Cela permet d'obtenir des données de trajectoire précises, et ainsi de suivre l'aéronef à partir de la suite d'images avec une haute précision.

En particulier, le dispositif de suivi 4 permet d'adapter automatiquement, pour l'itération donnée *n*, le choix du ou des filtre(s) 22 en fonction de l'ensemble d'états (*X*_{*n*-1}, *P*_{*n*-1})*ᵢ* de l'itération précédente *n* - 1.

De plus, des bruits des filtres 22 sont adaptés par la matrice de transition T, ce qui permet également d'augmenter la précision de suivi.

Le module d'interprétation 20 permet d'obtenir la probabilité d'appartenance de l'aéronef détecté à un type d'aéronef à partir de la donnée de paramétrage, à savoir notamment sans interprétation des données de trajectoire, mais directement à partir de la donnée de paramétrage. Cela permet ainsi d'obtenir le type d'aéronef de manière facile.

## Revendications

1. Dispositif de suivi (4) d'une évolution d'au moins un aéronef, dit aéronef détecté, dans un espace aérien, comprenant :
- un module de réception (10) d'une suite d'images de l'espace aérien ;
- un module de génération (12) comprenant une pluralité de filtres (22) comportant des modèles cinématiques, et configuré pour générer un ensemble d'états (X, P) relatifs à des paramètres cinématiques de l'aéronef détecté en fonction de ladite suite d'images et en fonction d'une matrice de transition (T) apte à modifier des probabilités définissant, pour une itération donnée du dispositif de suivi (4), le ou les filtre(s) (22) parmi la pluralité de filtres générant, lors de cette itération donnée, ledit ensemble d'états (X, P) ;
- un module d'émission (18) configuré pour émettre des données de trajectoire de l'aéronef détecté en fonction de l'ensemble d'états (X, P);
**caractérisé en ce que** le dispositif comprend également :
- un module de paramétrage intermédiaire (14) comprenant un premier réseau de neurones artificiels (32), une variable d'entrée dudit premier réseau de neurones artificiels (32) dépendant de l'ensemble d'états (X, P), une variable de sortie dudit premier réseau de neurones artificiels (32) étant une donnée de paramétrage,
- un module de paramétrage (16) comprenant un second réseau de neurones artificiels (34), une variable d'entrée du second réseau de neurones artificiels (34) étant ladite donnée de paramétrage, une variable de sortie dudit second réseau de neurones artificiels (34) étant ladite matrice de transition (T).

2. Dispositif de suivi (4) selon la revendication 1, dans lequel le second réseau de neurones artificiels (34) est configuré pour recevoir, pour l'itération donnée du dispositif de suivi (4), ladite donnée de paramétrage d'une itération précédente à l'itération donnée.

3. Dispositif de suivi (4) selon la revendication 1 ou la revendication 2, dans lequel le premier réseau de neurones artificiels (32) est un réseau de neurones récurrents à mémoire court et long-terme.

4. Dispositif de suivi (4) selon l'une quelconque des revendications précédentes, dans lequel le premier réseau de neurones artificiels (32) comprend une pluralité de couches de neurones artificiels et une cellule mémoire présentant une taille de mémoire choisie en fonction d'un nombre de types d'aéronefs susceptibles d'être suivis par le dispositif de suivi (4) et/ou d'un nombre de types de cinématiques prédéterminées d'aéronefs.

5. Dispositif de suivi (4) selon l'une quelconque des revendications précédentes, dans lequel la matrice de transition (T) a une dimension égale à m, m étant le nombre de filtres de la pluralité de filtres (22), la matrice de transition (T) étant de préférence apte à modifier des valeurs de probabilité (p), pour obtenir des valeurs intermédiaires de probabilité définissant le ou les filtres (22) générant, lors de l'itération donnée, l'ensemble d'états (X, P).

6. Dispositif de suivi (4) selon l'une quelconque des revendications précédentes, dans lequel chaque filtre (22) est un filtre de Kalman.

7. Dispositif de suivi (4) selon la revendication 6, dans lequel l'ensemble d'états (X, P) comprend au moins un élément choisi parmi le groupe consistant en :
- une vitesse horizontale de l'aéronef détecté ;
- une vitesse verticale de l'aéronef détecté, et
- un taux de virage de l'aéronef détecté.

8. Dispositif de suivi (4) selon l'une quelconque des revendications précédentes, comprenant en outre un module d'interprétation (20) comprenant un troisième réseau de neurones artificiels (36), une variable d'entrée dudit troisième réseau de neurones artificiels (36) étant la donnée de paramétrage, une variable de sortie dudit troisième réseau de neurones artificiels (36) étant une probabilité d'appartenance de l'aéronef détecté à un type d'aéronef parmi un ensemble de types d'aéronefs prédéterminés.

9. Système de surveillance (1) comprenant un dispositif de suivi (4) selon l'une quelconque des revendications précédentes, et un dispositif de classification (6) configuré pour déterminer un type d'aéronef de l'aéronef détecté en fonction des données de trajectoire de l'aéronef détecté.

10. Procédé de suivi (100) d'une évolution d'au moins un aéronef, dit aéronef détecté, dans un espace aérien, le procédé de suivi (100) comprenant :
- une étape de réception (130), lors de laquelle un module de réception (10) reçoit une suite d'images de l'espace aérien ;
- une étape de génération (140), lors de laquelle un module de génération (12), comprenant une pluralité de filtres (22) comportant des modèles cinématiques, génère un ensemble d'états (X, P) relatifs à des paramètres cinématiques de l'aéronef détecté en fonction de ladite suite d'images et en fonction d'une matrice de transition (T) modifiant des probabilités définissant, pour une itération donnée du procédé de suivi, le ou les filtre(s) (22) parmi la pluralité de filtres générant, lors de cette itération donnée, ledit ensemble d'états (X, P) ;
- une étape d'émission (150), lors de laquelle un module d'émission (18) émet des données de trajectoire de l'aéronef détecté en fonction de l'ensemble d'états (X, P) ;
**caractérisé en ce que** le procédé comprend également :
- une étape de paramétrage intermédiaire (160), lors de laquelle un premier réseau de neurones artificiels (32) reçoit comme variable d'entrée du premier réseau de neurones artificiels (32) une variable dépendant de l'ensemble d'états (X, P), et fournit comme variable de sortie dudit premier réseau de neurones artificiels (32) une donnée de paramétrage ;
- une étape de paramétrage (120), lors de laquelle un second réseau de neurones artificiels (34) reçoit comme variable d'entrée ladite donnée de paramétrage, et fournit comme variable de sortie ladite matrice de transition (T).

## Patentansprüche

1. Vorrichtung (4) zur Verfolgung einer Entwicklung mindestens eines Luftfahrzeugs, des sogenannten erfassten Luftfahrzeugs, in einem Luftraum, umfassend:
- ein Modul (10) zum Empfang einer Folge von Luftraumbildern;
- ein Erzeugungsmodul (12), das eine Vielzahl von Filtern (22) mit kinematischen Modellen umfasst und so konfiguriert ist, dass es einen Satz von Zuständen (X, P) erzeugt, die sich auf kinematische Parameter des erfassten Luftfahrzeugs beziehen in Abhängigkeit von der genannten Bildfolge und in Abhängigkeit von einer Übergangsmatrix (T), die geeignet ist, Wahrscheinlichkeiten zu modifizieren, die für eine gegebene Iteration der Verfolgungsvorrichtung (4), den oder die Filter (22) unter der Vielzahl von Filtern definieren, die bei dieser gegebenen Iteration den Satz von Zuständen (X, P) erzeugen;
- ein Sendemodul (18), das so konfiguriert ist, dass es Flugbahndaten des erfassten Luftfahrzeugs in Abhängigkeit von dem Satz von Zuständen (X, P) sendet;
**dadurch gekennzeichnet, dass** das Verfahren auch Folgendes umfasst:
- ein Zwischenparametrierungsmodul (14), das ein erstes künstliches neuronales Netz (32) umfasst, wobei eine Eingangsvariable des ersten künstlichen neuronalen Netzes (32) von dem Satz von Zuständen (X, P) abhängt, wobei eine Ausgangsvariable des ersten künstlichen neuronalen Netzes (32) ein Parametrisierungsdatensatz ist,
- ein Parametrisierungsmodul (16), das ein zweites künstliches neuronales Netz (34) umfasst, wobei eine Eingangsvariable des zweiten künstlichen neuronalen Netzes (34) der Parametrisierungsdatensatz ist, eine Ausgangsvariable des zweiten künstlichen neuronalen Netzes (34) die Übergangsmatrix ist

2. Verfolgungsvorrichtung (4) nach Anspruch 1, wobei das zweite künstliche neuronale Netz (34) so konfiguriert ist, dass es für die gegebene Iteration der Verfolgungsvorrichtung (4) den Parametrisierungsdatensatz einer Iteration empfängt, die der gegebenen Iteration vorausgeht.

3. Verfolgungsvorrichtung (4) nach Anspruch 1 oder 2, wobei das erste künstliche neuronale Netz (32) ein rekurrentes neuronales Netz mit Kurz- und Langzeitgedächtnis ist.

4. Verfolgungsvorrichtung (4) nach einem der vorhergehenden Ansprüche, wobei das erste künstliche neuronale Netz (32) eine Vielzahl von Schichten künstlicher Neuronen und eine Speicherzelle umfasst, die eine Speichergröße aufweist, die in Abhängigkeit von einer Anzahl von Luftfahrzeugtypen, die von der Verfolgungsvorrichtung (4) verfolgt werden können, und/oder einer Anzahl von Typen vorbestimmter Luftfahrzeugkinematiken ausgewählt wird.

5. Verfolgungsvorrichtung (4) nach einem der vorhergehenden Ansprüche, wobei die Übergangsmatrix (T) eine Dimension gleich m hat, wobei m die Anzahl der Filter aus der Vielzahl von Filtern (22) ist, wobei die Übergangsmatrix (T) vorzugsweise in der Lage ist, Wahrscheinlichkeitswerte (p) zu modifizieren, um Zwischenwahrscheinlichkeitswerte zu erhalten, die den oder die Filter (22) definieren, die in der gegebenen Iteration den Satz von Zuständen (X, P) erzeugen.

6. Verfolgungsvorrichtung (4) nach einem der vorhergehenden Ansprüche, wobei jeder Filter (22) ein Kalman-Filter ist.

7. Verfolgungsvorrichtung (4) nach Anspruch 6, wobei der Satz von Zuständen (X, P) mindestens ein Element aus der folgenden Gruppe enthält:
- eine horizontale Geschwindigkeit des erfassten Luftfahrzeugs;
- eine vertikale Geschwindigkeit des erfassten Luftfahrzeugs;
- eine Kurvenrate des erfassten Luftfahrzeugs.

8. Verfolgungsvorrichtung (4) nach einem der vorhergehenden Ansprüche, ferner umfassend ein Interpretationsmodul (20), das ein drittes künstliches neuronales Netz (36) umfasst, wobei eine Eingangsvariable des dritten künstlichen neuronalen Netzes (36) der Parametrisierungsdatensatz ist, wobei eine Ausgangsvariable des dritten künstlichen neuronalen Netzes (36) eine Wahrscheinlichkeit der Zugehörigkeit des erfassten Luftfahrzeugs zu einem Luftfahrzeugtyp aus einer Menge von vorbestimmten Luftfahrzeugtypen ist.

9. Überwachungssystem (1) mit einer Verfolgungsvorrichtung (4) nach einem der vorhergehenden Ansprüche und einer Klassifizierungsvorrichtung (6), die so konfiguriert ist, dass sie einen Luftfahrzeugtyp des erfassten Luftfahrzeugs auf der Grundlage von Flugbahndaten des erfassten Luftfahrzeugs bestimmt.

10. Verfolgungsverfahren (100) einer Entwicklung mindestens eines Luftfahrzeugs, des sogenannten erfassten Luftfahrzeugs, in einem Luftraum, wobei das Verfolgungsverfahren (100) umfasst:
- einen Empfangsschritt (130), bei dem ein Empfangsmodul (10) eine Folge von Bildern aus dem Luftraum empfängt;
- einen Erzeugungsschritt (140), bei dem ein Erzeugungsmodul (12), das eine Vielzahl von Filtern (22) mit kinematischen Modellen enthält, einen Satz von Zuständen (X, P) erzeugt, die sich auf kinematische Parameter des erfassten Luftfahrzeugs hinsichtlich der Bildfolge und einer Übergangsmatrix (T) beziehen und Wahrscheinlichkeiten modifizieren, die für eine gegebene Iteration des Verfolgungsverfahrens den oder die Filter (22) aus der Vielzahl von Filtern definieren, die bei dieser gegebenen Iteration den Satz von Zuständen (X, P) erzeugen;
- einen Sendeschritt (150), bei dem ein Sendemodul (18) Flugbahndaten des erfassten Luftfahrzeugs in Abhängigkeit von dem Satz von Zuständen (X, P) sendet;
**dadurch gekennzeichnet, dass** das Verfahren auch Folgendes umfasst:
- einen Zwischenparametrisierungsschritt (160), bei dem ein erstes künstliches neuronales Netz (32) als Eingangsvariable des ersten künstlichen neuronalen Netzes (32) eine von dem Satz der Zustände (X, P) abhängige Variable erhält und als Ausgangsvariable des ersten künstlichen neuronalen Netzes (32) einen Parametrisierungsdatensatz liefert;
- einen Parametrisierungsschritt (120), bei dem ein zweites künstliches neuronales Netz (34) als Eingangsvariable den Parametrisierungsdatensatz empfängt und als Ausgangsvariable die Übergangsmatrix (T) liefert.

## Claims

1. A device (4) for monitoring the progress of at least one aircraft, referred to as a detected aircraft, in an airspace, comprising:
- a module (10) for receiving a sequence of airspace images;
- a generation module (12) comprising a plurality of filters (22) including kinematic models, and configured to generate a set of states (X, P) relating to kinematic parameters of the detected aircraft as a function of said sequence of images and as a function of a transition matrix (T) capable of modifying probabilities defining, for a given iteration of the tracking device (4), the filter(s) (22) from among the plurality of filters generating, during this given iteration, the said set of states (X, P);
- a transmission module (18) configured to transmit trajectory data for the detected aircraft as a function of the set of states (X, P);
**characterised in that** the method comprises:
- an intermediate settings module (14) comprising a first artificial neural network (32), an input variable of said first artificial neural network (32) derived from the set of states (X, P), an output variable of said first artificial neural network (32) being a settings data item,
- a settings module (16) comprising a second artificial neural network (34), an input variable of the second artificial neural network (34) being said settings data, an output variable of said second artificial neural network (34) being said transition matrix (T)

2. A tracking device (4) as claimed in claim 1, in which the second artificial neural network (34) is configured to receive, for the given iteration of the tracking device (4), said settings data of an iteration preceding the given iteration.

3. A tracking device (4) according to claim 1 or claim 2, in which the first artificial neural network (32) is a recurrent neural network with short- and long-term memory.

4. A tracking device (4) according to any one of the preceding claims, in which the first artificial neural network (32) comprises a plurality of layers of artificial neurons and a memory cell having a memory size chosen as a function of a number of types of aircraft that can be tracked by the tracking device (4) and/or a number of types of predetermined aircraft kinematics.

5. A tracking device (4) according to any one of the preceding claims, in which the transition matrix (T) has a dimension equal to m, m being the number of filters of the plurality of filters (22), the transition matrix (T) preferably being capable of modifying probability values (p), in order to obtain intermediate probability values defining the filter or filters (22) generating, during the given iteration, the set of states (X, P).

6. A tracking device (4) according to any of the preceding claims, in which each filter (22) is a Kalman filter.

7. A tracking device (4) as claimed in claim 6, wherein the set of states (X, P) comprises at least one member selected from the group consisting of:
- a horizontal speed of the detected aircraft;
- a vertical speed of the detected aircraft, and
- a rate of turn of the detected aircraft.

8. A tracking device (4) according to any one of the preceding claims, further comprising an interpretation module (20) comprising a third artificial neural network (36), an input variable of said third artificial neural network (36) being the settings data, an output variable of said third artificial neural network (36) being a probability of the detected aircraft belonging to one of a set of predetermined aircraft types.

9. Surveillance system (1) comprising a tracking device (4) according to any one of the preceding claims, and a classification device (6) configured to determine an aircraft type of the detected aircraft as a function of the trajectory data of the detected aircraft.

10. A method (100) of tracking the progress of at least one aircraft, referred to as a detected aircraft, in an airspace, the tracking method (100) comprising:
- a reception step (130), during which a reception module (10) receives a series of images of the airspace;
- a generation step (140), during which a generation module (12), comprising a plurality of filters (22) including kinematic models, generates a set of states (X, P) relating to kinematic parameters of the detected aircraft as a function of said sequence of images and as a function of a transition matrix (T) modifying probabilities defining, for a given iteration of the tracking method, the filter or filters (22) from among the plurality of filters generating, during this given iteration, said set of states (X, P);
- a transmission step (150), in which a transmission module (18) transmits trajectory data of the detected aircraft as a function of the set of states (X, P);
**characterised in that** the method also comprises:
- an intermediate settings step (160), during which a first artificial neural network (32) receives, as an input variable of the first artificial neural network (32), a variable dependent on the set of states (X, P), and supplies, as an output variable of said first artificial neural network (32), a settings data item;
- a settings step (120), during which a second artificial neural network (34) receives said settings data as an input variable, and provides said transition matrix (T) as an output variable.
